(19) Europäisches Patentamt
European Patent Office
Office européen des brevets

(11) EP 2 578 981 B1

## (12) EUROPÄISCHE PATENTSCHRIFT

(45) Veröffentlichungstag und Bekanntmachung des Hinweises auf die Patenterteilung:
**18.06.2014 Patentblatt 2014/25**

(51) Int Cl.:
*F28D 17/00* *(2006.01)*    *F28D 20/00* *(2006.01)*

(21) Anmeldenummer: **11184261.3**

(22) Anmeldetag: **07.10.2011**

(54) **Wärmespeicher**

Heat storage

Accumulateur thermique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.04.2013 Patentblatt 2013/15**

(73) Patentinhaber: **Ed. Züblin AG**
**70567 Stuttgart (DE)**

(72) Erfinder:
• **Mayer, Peter-Michael, Dr.**
**70192 Stuttgart (DE)**
• **Niklasch, Christoph, Dr.**
**71139 Ehningen (DE)**
• **Cyris, Joachim**
**63075 Offenbach (DE)**
• **Pijanovic, Predrag**
**60318 Frankfurt (DE)**
• **Zunft, Stefan Martin, Dr.**
**70193 Stuttgart (DE)**

(56) Entgegenhaltungen:
**DE-A1- 19 749 793     GB-A- 2 173 886**
**US-A- 4 286 141**

**Beschreibung**

Technisches Gebiet

Die Erfindung betrifft einen in einem Wärmespeicherraum Temperaturwechseln unterworfene Wärmespeichermittel beherbergenden Wärmespeicher gemäß dem Oberbegriff des Anspruchs 1.

Stand der Technik

Allgemein werden Energiespeicher benötigt, beispielsweise um momentan überschüssige Energie z. B. in Form von Wärme und/oder mechanischer Energie und/oder potentieller Energie und/oder chemischer Energie zwischenzuspeichern.

Solche Energiespeicher können unmittelbar in Kraftwerken und/oder in Verbindung mit diskontinuierlich zur Verfügung stehenden Energiequellen und/oder in Verbindung mit diskontinuierlich Energie verbrauchenden Energiesenken vorgesehen sein, insbesondere in regenerative Energiequellen nutzenden Kraftwerken, um zumindest zeitweilig überschüssige Energie bis zu deren Bedarf zwischenzuspeichern.

So können beispielsweise in solarthermischen und/oder solardynamischen Kraftwerken als Wärmespeicher ausgeführte Energiespeicher vorgesehen sein, welche bei hoher Sonneneinstrahlung und/oder geringer Wärme und/oder Stromabnahme momentan überschüssige Energie in Form von Wärme speichern.

Beispielsweise um wetterabhängige regenerative Energiequellen, wie etwa Windkraft und/oder Solarenenergie, zur Spitzenlast- und/oder Mittellast- und/oder Grundlast-Stromversorgung vorzusehen, sind darüber hinaus Speicherkraftwerke bekannt, welche momentan überschüssige Energie, wie etwa die Energie von während günstiger Wetterbedingungen gegenüber dem Stromverbrauch zuviel produzierten Stroms zum Ausgleich während ungünstiger Wetterbedingungen gegenüber dem Stromverbrauch zuwenig produzierten Stroms speichern können. Dabei kann auch längerfristig vorgesehen sein Energiemengen vorzuhalten, die beispielsweise Nachfrageunterschiede zwischen Sommer und Winter ausgleichen können.

Eingangs erwähnte Energiespeicher können in Form von Speicherkraftwerken ausgeführt sein oder ein oder mehrere Teile eines Speicherkraftwerks bilden, beispielsweise um die Energie von während Zeiten geringen Stromverbrauchs zuviel produzierten Stroms zumindest so lange zwischenzuspeichern, bis der Stromverbrauch den momentan erzeugten Strom zu übersteigen droht.

Ein Druckluftspeicherkraftwerk ist ein Beispiel für ein solches Speicherkraftwerk.

Im Unterschied zu einem für den gleichen Einsatzzweck entwickelten Pumpspeicherkraftwerk, bei dem zu Schwachlastzeiten in einen hoch gelegenen Speichersee gepumptes Wasser über Fallrohre nach unten fließt und dabei mittels einer oder mehrerer Turbinen einen oder mehrere Generatoren antreibt, nutzt ein Druckluftspeicherkraftwerk die Energie, die in verdichteter bzw. komprimierter Luft steckt. In Schwachlastzeiten wird hierbei mit einem elektrisch angetriebenen Verdichter Luft verdichtet und in einem Druckluftspeicher gespeichert, beispielsweise in einer unterirdischen Kaverne oder Mine. In Zeiten z.B. hoher Stromnachfrage, wie etwa bei Spitzenlast, wird die Druckluft aus dem Druckluftspeicher entnommen und in einer Turbine entspannt, die ihre Leistung an einen gekoppelten Generator abgibt.

Der Druckspeicher des Druckluftspeicherkraftwerks stellt hierbei wie der Speichersee des Pumpspeicherkraftwerks einen Energiespeicher zur Zwischenspeicherung momentan überschüssiger Energie in Form von potentieller Energie dar.

Dabei stellt ein Druckluftspeicherkraftwerk kein Kraftwerk im herkömmlichen Sinne dar, da bei der Verdichtung der Luft mehr Energie aufgewandt werden muss, als bei deren Entspannung wieder entnommen werden kann. Ein Druckluftspeicherkraftwerk ist demnach vielmehr ein aus einem oder mehreren Druckluftspeichern bestehenden Energiespeicher und angeschlossener Turbine und Generator zur Bereitstellung elektrischen Stroms zu Zeiten der Spitzenlast.

Bekannte Probleme von Druckluftspeicherkraftwerken sind deren eingeschränkter Gesamtwirkungsgrad bedingt einerseits durch hohe Verluste aufgrund beabsichtigter und unbeabsichtigter Wärmeabgabe bei der Erzeugung und Speicherung der Druckluft sowie andererseits durch gegebenenfalls vorgesehene, der Gefahr einer Vereisung der Turbine bei der Entspannung der Druckluft entgegnwirkender konventioneller Maßnahmen. Die Gründe hierfür sind folgende:

- Die Verdichtung bzw. Kompression der Luft führt zu einer Erhöhung deren Temperatur. Näherungsweise kann hierbei von einer adiabatischen Zustandsänderung ausgegangen werden, bei der die vom Verdichter an der Luft verrichtete Arbeit direkt die innere Energie der Luft und damit deren Temperatur erhöht. Hierbei können je nach thermodynamischem Ausgangszustand der Luft, Verdichterleistung und Gesamtdruckverhältnis aller Stufen des Verdichters Temperaturen von weit über 1000°C erreicht werden. Um die Komponenten der Anlage vor diesen Temperaturen zu schützen ist bekannt, die Temperatur der verdichteten Luft über beispielsweise kühlmitteldurchströmte Wärmetauscher an die Umgebung abzugeben.

- Abhängig von der Dauer des Verbleibs der verdichteten Luft bis zu deren Wiederentnahme im Druckluftspeicher findet eine Abgabe eines Teils der Wärme über die Wandungen des Druckluftspeichers an die Umgebung statt. Ist der Druckluftspeicher beispielsweise eine Kaverne oder eine Mine wird die Wärme an das umgebende Mineral bzw. Gestein abgegeben.

- Die Luft kühlt bei der Expansion in der Turbine stark ab. Hierdurch kann in der Luft enthaltene Restfeuchtigkeit gefrieren und die Turbine vereisen. Um dies zu verhindern muss die Luft vor oder während der Entspannung erwärmt werden, beispielsweise durch konventionelles Zuheizen mittels eines Brennstoffs, wie etwa Erdgas. Hierbei wird der Brennstoff der Luft bei deren Entnahme aus dem Druckluftspeicher beigemengt. Das Brennstoff-Luft-Gemisch wird anschließend vor dem Eintritt in eine Gasturbine entzündet, welche den Generator antreibt.

Zur Verbesserung des Gesamtwirkungsgrads von Druckluftspeicherkraftwerken ist bekannt, die Restwärme der der Gasturbine entweichenden Abgase mittels eines Rekuperators der aus dem Druckluftspeicher entnommenen Luft noch vor deren Eintritt in die Gasturbine zuzuführen. Hierdurch wird zumindest der Brennwert des Brennstoff-Luft-Gemischs besser ausgeschöpft.

Darüber hinaus sind so genannte adiabatische Druckluftspeicherkraftwerke bekannt, bei denen zumindest zum Teil die bei der Verdichtung der Luft erzeugte Wärme unter Abkühlung der verdichteten Luft bei deren Zufuhr zum Druckluftspeicher einem Wärmespeicher zugeführt wird und der Wärmespeicher bei der Entnahme der Druckluft aus dem Druckluftspeicher wieder entladen wird, indem die in dem Wärmespeicher gespeicherte Wärme der unter Entspannung durch die Turbine strömenden Luft wieder zugeführt wird. Bei der Entnahme aus dem Druckluftspeicher durchströmt die komprimierte Luft hierbei den Wärmespeicher, erhitzt sich und gelangt erst dann in die Turbine. Dadurch wird weniger oder idealerweise kein Brennstoff zur Erwärmung der Luft benötigt. Während der Expansion in der Turbine kühlt die Luft auf Umgebungstemperatur ab. Ein adiabatisches Druckluftspeicherkraftwerk erreicht so im Vergleich zu einem zuvor beschriebenen Druckluftspeicherkraftwerk mit Gasturbine einen höheren Wirkungsgrad. Entgegen ihrer Bezeichnung führen adiabatische Druckluftspeicherkraftwerke jedoch keine adiabatischen Zustandsänderungen aus, sie kommen durch die Rückführung der bei der Verdichtung erzeugten Wärme an die aus dem Druckluftspeicher entnommene Luft dem Wirkungsgrad adiabatischer Zustandsänderungen lediglich näher.

Ein adiabatisches Druckluftspeicherkraftwerk verfügt dabei über wenigstens zwei eingangs erwähnte Energiespeicher. Ein erster zur Speicherung potentieller Energie vorgesehener Energiespeicher umfasst den beispielsweise durch eine oder mehrere Kavernen zur Aufnahme und Speicherung von unter Druck stehender Luft gebildeten Druckluftspeicher. Ein zweiter, zur Speicherung von Energie in Form von Wärme vorgesehener Energiespeicher umfasst wenigstens einen Wärmespeicher.

Damit ein Wärmespeicher seine Wärmespeicherfunktion erfüllen kann, weist dieser beispielsweise in einem beispielsweise durch einen Behälterinnenraum gebildeten Wärmespeicherraum beherbergte Wärmespeichermittel auf. Die Wärmespeichermittel sind in der Lage, einem Arbeitsfluid Wärme zu entnehmen, die Wärme über einen bestimmten Zeitraum hinweg zu speichern und anschließend beispielsweise dem selben Arbeitsfluid wieder zuzuführen. Dabei wird den Wärmespeichermitteln zunächst vermittels des Arbeitsfluids Wärme zugeführt, welche anschließend von den Wärmespeichermitteln möglichst verlustarm gespeichert wird, um zumindest einen Teil der gespeicherte Wärme den Wärmespeichermitteln bei Bedarf vermittels des Arbeitsfluids wieder zu entziehen.

Die Wärmespeichermittel können derart ausgebildet sein, dass sie unmittelbar von dem die Wärmezufuhr zum Wärmespeicher und die Wärmeentnahme aus dem Wärmespeicher besorgenden Arbeitsfluid durchströmt sind. Bei dem Arbeitsfluid kann es sich beispielsweise direkt um die unter Druck stehende Luft eines Druckluftspeicherkraftwerks handeln.

Hierzu können die Wärmespeichermittel in einem durch einen Behälterinnenraum eines auch als Containment bezeichneten Druckbehälters gebildeten Wärmespeicherraum untergebracht sein.

Durch EP 1 857 614 A2 ist ein als ein Wärmespeicher für ein adiabatisches Druckluftspeicherkraftwerk ausgeführter und für diesen Zweck Wärmespeichermittel beherbergender Druckbehälter bekannt. Dieser Wärmespeicher weist einen durch einen von dem Druckbehälter umschlossenen Behälterinnenraum gebildeten Wärmespeicherraum auf, in welchem die Wärmespeichermittel untergebracht sind. Zur Zufuhr und zur Entnahme von Wärme kann der Wärmespeicherraum von einem durch einer Kaverne von einem Verdichter oder einer Turbine von der Kaverne zuzuführende Druckluft gebildeten Arbeitsfluid durchströmt werden. Der Druckbehälter dieses Wärmespeichers weist einen vorgespannten Betonmantel aus hochfestem Beton mit Stahlkappe auf. Die Vorspannung erfolgt horizontal und vertikal bevorzugt durch Spannglieder aus Kohlefasern. Eine hitzebeständige Schicht und eine erste thermisch isolierende Schicht trennen die Wärmespeichermittel vom temperaturempfindlicheren Beton. Zwischen der ersten thermisch isolierenden Schicht und dem Betonmantel bzw. der Stahlkappe kann sich darüber hinaus noch eine zweite thermisch isolierende Schicht befinden, falls die erste thermisch isolierende Schicht nicht selbst in ausreichendem Maße thermisch isolierend wirkt. Bei der zweiten thermisch isolierenden Schicht kann es sich um eine Luftschicht handeln. Zur Kühlung der Innenseite des Betonmantels kann darüber hinaus in dem Betonmantel auch noch ein Kühlmittelkreislauf vorgesehen sein. Bei dem verwendeten Kühlmittel handelt es sich bevorzugt um Wasser. Die Wärmespeichermittel bestehen aus Formsteinen aus einem keramischen Material. Die Formsteine weisen Durchführungen in Form von Strömungskanalabschnitten für die unter Druck stehende Luft auf. Die Wärmespeichermittel haben wegen der Änderung deren Volumens bei Temperaturwechseln keinen direkten Kontakt zu dem den Behälterinnenraum umgebenden Betonmantel und auch nicht zu den die Wärmespeichermittel vom temperaturempfindlicheren Beton trennenden hitzebeständigen und thermisch isolierenden Schichten. Damit die ständigen Temperaturzyklen nicht zu einer Verschiebung der Formsteine und deren Strömungskanalabschnitte relativ zueinander führen, können die Formsteine mit Nut und Feder versehen sein, mit denen sie ineinander greifen.

Nachteilig an den Wärmespeichermitteln dieses Wärmespeichers ist unter Anderem deren hoher Herstellungsaufwand. Der hohe Herstellungsaufwand ist unter anderem bedingt durch die in den aus Formsteinen hergestellten Wärmespeichermitteln vorzusehenden und für die zur Durchströmung mit dem Arbeitsfluid bzw. der Druckluft vorgesehenen Strömungskanäle sowie durch den hohen Aufwand beim Einbringen und Zusammensetzen der Formsteine, wo darauf geachtet werden muss, dass die in den einzelnen Formsteinen vorgesehenen Strömungskanalabschnitte möglichst stoß- und versatzfrei ineinander übergehen, um Durchströmungsverluste so gering wie nur möglich zu halten.

Durch WO 2010/060524 A1 ist eine Schüttung bzw. ein Haufwerk mit einander berührenden Schüttungs- bzw. Haufwerkelementen als Wärmespeichermittel bekannt. Zwischen den einander berührenden Schüttungselementen weist die Schüttung miteinander kommunizierende, durchgehende Poren auf, welche zumindest zeitweilig von einem Wärmeübertragungsfluid durchströmt werden können.

Die Schüttung ist zwar kostengünstig herstellbar, leidet aber unter folgenden Nachteilen: Die zur Durchströmung durch das Wärmeübertragungsfluid vorgesehenen durchgehenden Poren der Schüttung werden durch allmählich aus sich wegen unterschiedlicher Wärmeausdehnungen bei aufeinander folgenden Temperaturwechseln gegenseitig vollständig oder teilweise zerstörenden Schüttungselementen entstehendem Schutt zugesetzt. Alternativ oder zusätzlich kann der sich in der Schüttung aufbauende und zwischen der Schüttung und den Wandungen eines die Schüttung beherbergenden Wärmespeicherraums wirkende Horizontaldruck höher steigen, als der hydrostatische Druck in einer in ihrer Dichte der mittleren Dichte der Schüttung entsprechenden Flüssigkeit in einer Tiefe, die der Gesamthöhe der Schüttung entspricht. Eine Ursache hierfür liegt beispielsweise darin, dass die Schüttungselemente beim Schrumpfen während des Abkühlens absacken und beim Ausdehnen während eines Temperaturanstiegs im abgesackten Zustand untereinander verkeilen. Hierdurch können im Laufe aufeinander folgender Temperaturzyklen die Wandungen des die Schüttung beherbergenden Wärmespeicherraums beschädigt und/oder zur Wärmeisolation zwischen diesen Wandungen und der Schüttung angeordnete Isolationsmittel zerstört werden, wodurch ein mit solchen Wärmespeichermitteln ausgeführter Wärmespeicher eine nur begrenzte Langzeitstabilität aufweist. Sowohl für die gegenseitige Zerstörung der Schüttungselemente, als auch für die Zerstörung der Wärmeisolation und/oder der Beschädigung der Wandungen des Wärmespeicherraums ist ein sowohl zwischen den Schüttungselementen untereinander, als auch zwischen den Schüttungselementen und der Wandungen des Wärmespeicherraums wirkender, über einen vom Material und der Beschaffenheit der Schüttungselemente, der Isolationsmittel der Wärmeisolation und den Wandungen abhängigen Druck hinausgehender kritischer Horizontaldruck in der Schüttung maßgeblich verantwortlich.

Durch US 4,286,141 ist ein Wärmespeicher nach dem Oberbegriff des Anspruchs 1 bekannt. Der Wärmespeicher weist in einem Wärmespeicherraum beherbergte, Temperaturwechseln unterzogene Wärmespeichermittel auf, welche zumindest zeitweilig von einem die Wärmezufuhr zum und die Wärmeentnahme aus dem Wärmespeicher besorgenden Arbeitsfluid durchströmt sind. Die Wärmespeichermittel umfassen eine Schüttung mit einander berührenden Schüttungselementen. Die Schüttung weist zwischen den einander berührenden Schüttungselementen miteinander kommunizierende, durchgehende Poren auf, welche zumindest zeitweilig von dem Arbeitsfluid durchströmt sind. In dem Wärmespeicherraum ist ein thermomechanischer Schild untergebracht. Dieser umfasst wenigstens ein die Wärmeisolation des Wärmespeichers zumindest teilweise besorgendes Isolationsmittel sowie wenigstens eine zumindest einen Teil zumindest des Horizontaldrucks in der Schüttung von dem mindestens einen Isolationsmittel fernhaltende Rückhalteeinrichtung. Die Rückhalteeinrichtung hält zumindest einen Teil der Schüttungselemente der Schüttung vor einer zumindest in horizontaler Richtung auf den Wärmespeicherraum zumindest teilweise umgebende Wandungen des Wärmespeichers zu gerichteten Bewegung zurück. Zumindest ein Teil der Rückhalteeinrichtung ist als Käfig zumindest für einen Teil der Schüttungselemente der Schüttung ausgeführt. Die Rückhalteeinrichtung ist von den Wärmespeicherraum begrenzenden Wandungen beabstandet angeordnet.

Durch DE 197 49 793 A1 und durch GB 2 173 886 A sind Wärmespeicher mit in einem Wärmespeicherraum beherbergten, Temperaturwechseln unterzogenen Wärmespeichermitteln bekannt. Die Wärmespeichermittel dieser Wärmespeicher sind zumindest zeitweilig von einem die Wärmezufuhr zum und die Wärmeentnahme aus dem Wärmespeicher besorgenden Arbeitsfluid durchströmt. Die Wärmespeichermittel umfassen eine Schüttung mit aneinander berührenden Schüttungselementen. Die Schüttung weist zwischen den einander berührenden Schüttungselementen miteinander kommunizierende, durchgehende Poren auf, welche zumindest zeitweilig von dem Arbeitsfluid durchströmt sind.

Aufgabe der Erfindung

Der Erfindung liegt die Aufgabe zugrunde, einen in einem Wärmespeicherraum Temperaturwechseln unterworfene Wärmespeichermittel beherbergenden Wärmespeicher zu entwickeln, der ausgehend vom Stand der Technik einen überschaubaren Herstellungsaufwand einhergehend mit einer hohen Langzeitstabilität aufweist.

Darstellung der Erfindung

Die Aufgabe wird gelöst durch einen Wärmespeicher mit den Merkmalen des unabhängigen Anspruchs 1.

Die Erfindung ist demnach durch einen in einem Wärmespeicherraum Temperaturwechsein unterworfene Wärmespeichermittel beherbergenden Wärmespeicher verwirklicht.

Die Wärmespeichermittel sind dabei zum Austausch von Wärme mit einem den Wärmespeicherraum zumindest zeitweilig durchströmenden Arbeitsfluid sowie zur wenigstens zeitweiligen Speicherung der Wärme von deren Zufuhr bis zu deren Entnahme durch das Arbeitsfluid vorgesehen.

Die Wärmespeichermittel sind bevorzugt derart ausgebildet, dass sie vorzugsweise unmittelbar zumindest zeitweilig von dem die Wärmezufuhr und die Wärmeentnahme besorgenden Arbeitsfluid durchströmt werden können.

Die Wärmespeichermittel umfassen eine Schüttung bzw. ein Haufwerk mit einander berührenden Schüttungs- bzw. Haufwerkelementen. Zwischen den einander berührenden Schüttungselementen weist die Schüttung miteinander kommunizierende, durchgehende Poren auf, welche zumindest zeitweilig von dem Arbeitsfluid durchströmt werden können.

In dem Wärmespeicherraum ist mindestens ein thermomechanischer Schild untergebracht. Der thermomechanische Schild umfasst wenigstens ein die Wärmeisolation des Wärmespeichers zumindest teilweise besorgendes Isolationsmittel. Das zumindest eine Isolationsmittel schützt die den Wärmespeicherraum begrenzenden bzw. zumindest teilweise umschließenden Wandungen des Wärmespeichers vor einem schädlichen, beispielsweise die Festigkeit und/oder Dichtheit eines Materials der Wandungen beeinträchtigenden Wärmeeintrag. Das mindestens eine Isolationsmittel kann beispielsweise zumindest teilweise von den Wandungen des Wärmespeichers umfasst sein. Beispielsweise kann wenigstens ein Isolationsmittel auf den dem Wärmespeicherraum zugewandten Innenseiten der Wandungen des Wärmespeichers aufgebracht und/oder befestigt und/oder abgestützt sein.

Um das mindestens eine Isolationsmittel vor einer Beschädigung oder Zerstörung durch den Horizontaldruck in der Schüttung zu schützen umfasst der thermomechanische Schild darüber hinaus wenigstens eine zumindest gegenüber dem Horizontaldruck in der Schüttung innendruckfeste Rückhalteeinrichtung. Die mindestens eine Rückhalteeinrichtung hält wenigstens einen Teil zumindest des Horizontaldrucks in der Schüttung von dem mindestens einen Isolationsmittel fern, so dass das ein Druck, dem das mindestens eine Isolationsmittel höchstens ausgesetzt ist, unter einem das mindestens eine Isolationsmittel zerstörenden oder beschädigenden Niveau eines kritischen Horizontaldrucks bleibt.

Die mindestens eine zumindest einen Teil eines thermomechanischen Schilds bildende Rückhalteeinrichtung fängt somit wenigstens einen Teil des zwischen der Schüttung und den Wärmespeicherraum begrenzenden Wandungen und/oder in der Schüttung auftretenden Horizontaldrucks ab, so dass es zu keiner Zerstörung oder Beschädigung eines auf Seite der dem Wärmespeicherraum zugewandten Innenseiten der diesen zumindest teilweise umgebenden Wandungen des Wärmespeichers angeordneten und/oder abgestützten Isolationsmittels kommen kann.

Damit die mindestens eine Rückhalteeinrichtung gegenüber dem Horizontaldruck in der Schüttung innendruckfest ausgeführt ist, ist diese so ausgeführt, dass sie zumindest einen Teil der Schüttungselemente der Schüttung von einer Bewegung zumindest in horizontaler Richtung auf die den Wärmespeicherraum des Wärmespeichers zumindest teilweise umgebenden Wandungen zu zurückzuhalten in der Lage ist. Demnach muss die mindestens eine Rückhalteeinrichtung keinesfalls als ein abgeschlossener Behälter ausgeführt sein, sondern ist als ein zumindest einen Teil der Schüttungselemente der Schüttung zurückhaltender Käfig ausgeführt. Ein solcher Käfig kann beispielsweise sämtliche Schüttungselemente, die sich innerhalb des selben befinden zurückzuhalten in der Lage sein. Die Menge von gegebenenfalls außerhalb des Käfigs untergebrachten Schüttungselementen ist dabei vorzugsweise so gewählt, dass diese nicht ausreicht, einen den kritischen Horizontaldruck übersteigenden Druck aufzubauen. Zusätzlich kann ein Teil der Rückhalteeinrichtung z.B. gasdicht gegenüber den den Wärmespeicherraum begrenzenden und umschließenden Wandungen ausgeführt sein.

Vorzugsweise ist die mindestens eine in dem Wärmespeicherraum untergebrachte und zumindest einen Teil wenigstens eines thermomechanischen Schilds bildende Rückhalteeinrichtung von den den Wärmespeicherraum begrenzenden Wandungen und einem gegebenenfalls von diesen umfassten und/oder hierauf aufgebrachten und/oder befestigten und/oder abgestützten Isolationsmittel beabstandet angeordnet. Hierdurch wird jeglicher Horizontaldruck von den Wandungen und einem beispielsweise von diesen umfassten oder an bzw. gegenüber diesen abgestützten, die Wärmeisolation des Wärmespeichers zumindest teilweise besorgenden Isolationsmittel vollständig fern gehalten.

Die mindestens eine Rückhalteeinrichtung umfasst mehrere stehend in dem Wärmespeicherraum angeordnete, beispielsweise mit wenigstens einem Teil der Schüttungselemente der Schüttung befüllte Rohre. Die Rohre können vom Arbeitsfluid zumindest zeitweilig durchströmt sein. Sind die Rohre mit wenigstens einem Teil der Schüttungselemente der Schüttung befüllt, bildet jedes Rohr eine eigene Rückhalteeinrichtung für die jeweils darin untergebrachten Schüttungselemente. Dabei ist jedes befüllte Rohr vorteilhaft zumindest zeitweilig vom Arbeitsfluid durchströmt.

Mehrere stehend angeordnete Rohre sind zumindest über den Umfang des Wärmespeicherraums gleichmäßig verteilt angeordnet. In den oder die zwischen den Rohren verbleibenden Zwischenräume sind Schüttungselemente der Schüttung eingebracht. Der oder die zwischen den Rohren verbleibenden Zwischenräume können vom Arbeitsfluid zumindest zeitweilig durchströmt sein. Hierdurch wird ein inniger Austausch von Wärme zwischen dem Arbeitsfluid und den in den oder die verbleibenden Zwischenräume eingebrachten Schüttungselemente erhalten. Zumindest die über den Umfang verteilt angeordneten Rohre können dabei derart eng nebeneinander stehend angeordnet sein, dass die Gesamtzahl der Rohre einen Käfig für die innerhalb des Umfangs zwischen den Rohren angeordnete Schüttungselemente der Schüttung bilden. Dabei bildet die Gesamtheit der Rohre eine als Käfig ausgeführte Rückhalteeinrichtung für die innerhalb des Umfangs zwischen ihnen untergebrachten Schüttungselemente. Sind die Rohre zusätzlich zumindest teilweise mit wenigstens einem Teil der Schüttungselemente der Schüttung befüllt, bildet jedes Rohr zusätzlich eine eigene Rückhalteeinrichtung für die jeweils darin untergebrachten Schüttungselemente.

Die Rohre des Käfigs sind wie bereits zuvor beschrieben mit Schüttungselementen zumindest teilweise befüllt und von Arbeitsfluid zumindest zeitweilig durchströmt.

Eine alternative Ausgestaltung sieht vor, dass die Rohre zumindest teilweise als massive Stangen bzw. Streben ausgeführt sind.

Die Rohre können perforiert bzw. mit Durchbrüchen in ihren Mantelflächen versehen sein. Dies dient zur Verbesserung des Wärmeaustauschs und zur Verringerung der Durchströmungsverluste durch Vergrößerung des zur Durchströmung mit dem Arbeitsfluid zur Verfügung stehenden Querschnitts und durch Bildung alternativer Strömungswege.

Die vorzugsweise stehend im Wärmespeicherraum angeordneten Rohre können gemeinsam auf einer oder mehreren gleichen oder verschiedenen Höhenstufen innerhalb des Wärmespeicherraums untereinander verbunden und dadurch versteift sein, um einen höheren Horizontaldruck abzufangen in der Lage zu sein. Beispielsweise können die Rohre durch die Innenkontur des Wärmespeichers in unterschiedlichen Querschnittsebenen nachbildende Ringreife untereinander verbunden sein.

Wenigstens ein zumindest einen Teil mindestens einer Rückhalteeinrichtung und damit eines thermomechanischen Schilds bildendes Rohr kann auf einer oder mehreren gleichen oder verschiedenen Höhenstufen innerhalb des Wärmespeicherraums versteift sein, um einen höheren Horizontaldruck abzufangen in der Lage zu sein.

Zumindest ein Rohr kann beispielsweise als im Wärmespeicherraum beherbergter und von dessen Wandungen beabstandeter ringversteifter Innenbehälter ausgeführt sein.

Der Begriff Rohr definiert hierbei einen beispielsweise hohlzylinderförmigen Körper, mit einer Grundfläche beliebiger Geometrie und einer im Wesentlichen geradlinigen Erstreckung seiner Mittelachse. Die Mittelachse ist beispielsweise dadurch definiert, dass sich diese entlang der Schwerpunkte der Querschnitte eines Rohres in aufeinander folgenden, parallelen Querschnittsebenen erstreckt. Hieraus ist ersichtlich, dass beliebige Geometrien als Grundfläche für ein Rohr in Frage kommen. Dabei können verschiedene Rohre unterschiedliche oder gleiche Grundflächen sowie verschiedene Querschnitte in normal zur Mittelachse liegenden Querschnittsebenen eines oder mehrerer Rohre unterschiedliche oder gleiche Grundfläche aufweisen. Grundsätzlich ist auch denkbar, dass die Mittelachse eines oder mehrerer Rohre sich nicht geradlinig, sondern beispielsweise entlang einer beliebigen z.B. mathematischen Kurve erstreckt. Die Mantelfläche des hohlzylinderförmigen Körpers kann dabei im Verhältnis zu seiner Erstreckung längs und quer zur Mittelachse dünnwandig ausgeführt sein. Die Mantelfläche kann perforiert bzw. mit Durchbrüchen versehen sein. Die Durchbrüche sind dabei vorzugsweise derart bemessen, dass einzelne Schüttungselemente nicht durch sie hindurchschlüpfen können. Grundsätzlich können eine oder mehrere Rückhalteeinrichtungen anstelle in Form eines oder mehrerer Rohre auch als massive, zylinderförmige Stangen ausgeführt sein, insbesondere wenn sie gemeinsam einen Käfig für zumindest einen Teil der Schüttungselemente der Schüttung bilden. Für die Mittelachse einer zylinderförmigen Stange gilt das zur Mittelachse des hohlzylinderförmigen Körpers gesagte.

Ein Rohr einer zumindest einen Teil eines thermomechanischen Schilds darstellenden Rückhalteeinrichtung kann beispielsweise als ein Hohlzylinder aus dünnwandigen Fügeteilen mit zweidimensionalem Spannungszustand sowie gegebenenfalls in verschiedenen, voneinander beabstandeten, normal zur Mittelachse des Hohlzylinders orientierten Querschnittsebenen angeordnete Versteifungselemente verwirklicht sein.

Die Schüttungselemente der Schüttung sind vorzugsweise kugelförmig und weisen besonders bevorzugt alle zumindest in etwa den selben Durchmesser auf. Eine Kugelform stellt eine besonders gute Ausnutzung des Wärmespeicherraums durch die Wärmespeichermittel sicher. Darüber hinaus weisen Kugeln eine kleinstmögliche Angriffsfläche für ein gegenseitiges Verkeilen auf, was mitursächlich für einen den kritischen Horizontaldruck übersteigenden Horizontaldruck ist.

Mit Schüttungselementen befüllte Rohre weisen vorzugsweise einen Innendurchmesser auf, der bevorzugt verschieden ist von einem ganzzahligen Vielfachen des Durchmessers der bevorzugt kugelförmigen Schüttungselemente bevorzugt sowohl in thermisch ausgedehntem, heißem Zustand, als auch in thermisch geschrumpften, kalten Zustand in Bezug auf den Bereich der auftretenden Betriebstemperaturen des Wärmespeichers. Dadurch kommt es entlang einer linearen Erstreckung des Innendurchmessers innerhalb eines horizontalen Querschnitts durch den Wärmespeicherraum zu keiner vollständigen Einnahme der linearen Erstreckung durch Schüttungselemente. Durch die vorgesehene Maßnahme bleibt immer ein Teil der linearen Erstreckung frei von Schüttungselementen, wodurch diesen eine gegenseitige Bewegungsmöglichkeit erhalten bleibt und einer gegenseitigen Zerstörung der Schüttungselemente untereinander innerhalb des thermomechanischen Schilds vorgebeugt wird.

Beispielsweise weisen die mit Schüttungselementen befüllte Rohre einen Innendurchmesser auf, der größer ist als der Durchmesser eines Schüttungselements und kleiner ist, als die Summe der Durchmesser von 100 Schüttungselementen und dabei verschieden ist, von einem ganzzahligen Vielfachen des Durchmessers eines Schüttungselements bei einer mittleren Betriebstemperatur des Wärmespeichers. Eine solche mittlere Betriebstemperatur kann beispielsweise als das arithmetische Mittel von einer im Betrieb des Wärmespeichers beim Beladen (Aufladebetrieb) auftretenden Spitzentemperatur und einer beim Entladen (Entladebetrieb) auftretenden Mindesttemperatur berechnet werden. Andere Berechnungsverfahren und Temperaturgrenzen können ebenfalls zur Bestimmung der Betriebstemperatur herangezogen werden.

Besonders bevorzugt besteht zumindest ein Teil der Schüttungselemente zumindest zum Teil aus mindestens einem Keramikwerkstoff. Vorzugsweise bestehen alle Schüttungselemente vollständig aus mindestens einem Keramikwerkstoff.

Besonders bevorzugt handelt es sich bei den Schüttungselementen um Keramikkugeln.

Alternativ oder zusätzlich kann zumindest ein Teil der Schüttungselemente zumindest teilweise aus einem gebrochenen Naturmaterial bestehen oder ein solches umfassen. Gebrochenes Naturmaterial kann besonders günstig zur Verfügung gestellt werden. Darüber hinaus ist so ein ständiges und ohne die Gefahr von Engpässen bei der Beschaffung Zurverfügungstehen zumindest eines Bestandteils der Schüttungselemente der Schüttung sichergestellt. Darüber hinaus können Zwischenlagerung und Transport einfach und kostengünstig gewährleistet werden.

Der dem Verhältnis des Volumens aller Schüttungselemente der Schüttung zum von der Schüttung eingenommenen Volumen entsprechende Raumfüllungsgrad der Schüttung ist bevorzugt kleiner gleich

$$\pi / 3\sqrt{2} \approx 0,74048 \approx 74\%.$$

Vorzugsweise weist die Schüttung eine dem Verhältnis des Volumens der die Zwickel der Schüttung bildenden, miteinander kommunizierenden, durchgehenden Poren zum von der Schüttung eingenommenen Volumen entsprechende Porosität von bis zu 45% auf, besonders bevorzugt von 38% bis 42%.

Dabei gilt vorzugsweise, dass die Summe des Raumfüllungsgrads und der Porosität gleich 1 ist.

Der Wärmespeicher kann als Energiespeicher für ein solarthermisches Kraftwerk und/oder für ein adiabatisches Druckluftspeicherkraftwerk vorgesehen sein.

Bei dem Arbeitsfluid kann es sich beispielsweise um unter Druck stehende Luft eines Druckluftspeicherkraftwerks handeln, etwa um die von einem Verdichter einer Kaverne oder von der Kaverne einer Turbine zuzuführende Druckluft.

Der Wärmespeicherraum kann durch einen beispielsweise von einem Betonmantel umgebenen Behälterinnenraum gebildet sein.

Der Wärmespeicher kann einen Druckbehälter beispielsweise mit einem einen als Wärmespeicherraum vorgesehenen Behälterinnenraum umgebenden Betonmantel umfassen. Hierdurch ist der Wärmespeicher zur Verwendung in Verbindung mit einem unter Druck stehenden Arbeitsfluid geeignet. Beispielsweise kann der Wärmespeicher so zur Verwendung in einem Druckluftspeicherkraftwerk vorgesehen sein, wobei die unter Druck stehende Luft das Arbeitsfluid bilden kann.

Es ist ersichtlich, dass die Erfindung beispielsweise dadurch verwirklicht sein kann, indem in dem Wärmespeicherraum mindestens eine zumindest einen Teil wenigstens eines thermomechanischen Schilds bildende innenüberdruckfeste Rückhalteeinrichtung beispielsweise aus dünnwandigen Fügeteilen mit zweidimensionalem Spannungszustand sowie gegebenenfalls Versteifungselementen untergebracht ist, welche von wenigstens ein die Wärmeisolation des Wärmespeichers zumindest mit besorgenden Isolationsmittel beispielsweise umfassenden, den Wärmespeicherraum des Wärmespeichers begrenzenden und umschließenden Wandungen beabstandet ist und zumindest mit einem Teil der Schüttungselemente der Schüttung befüllt und zumindest zeitweilig vom Arbeitsfluid durchströmt ist. Beispielsweise kann die mindestens eine Rückhalteeinrichtung mehrere Rohre oder Rohrsegmente umfassen, die jeweils beispielsweise wie beschrieben aus dünnwandigen Fügeteilen hergestellt sein können. Die Summe der Rückhalteeinrichtungen kann dabei einen Käfig für zumindest einen Teil der Schüttungselemente der Schüttung und damit wiederum eine Rückhalteeinrichtung bilden.

Auch denkbar ist, dass eine oder mehrere Rückhalteeinrichtungen zu zumindest einem Teil der den Wärmespeicherraum umgebenden Wandungen des Wärmespeichers hin eine zumindest weitgehend geschlossene Außenkontur aufweisen und innerhalb dieser geschlossenen Außenkontur unmittelbar, beispielsweise durch eine gemeinsame, gegebenenfalls perforierte oder mit Durchbrüchen versehene oder geschlossene Trennwand aneinander angrenzen. Derart ausgeführte Rückhalteeinrichtungen können den zur Verfügung stehenden, durch die Außenkontur umgebenen bzw. eingeschlossenen Teil des Wärmespeicherraums beispielsweise in Segmente unterteilen. Diese durch jeweils mindestens eine einen Teil der Außenkontur bildende eigene Wandung und durch jeweils mindestens eine gemeinsame Trennwand umschlossenen Segmente können jeweils ein Rohr eines Rohrbündels mit zumindest einer gemeinsamen Trennwand zwischen den durch jedes Rohr gebildeten Kanälen des Rohrbündels bilden.

Vorteile gegenüber dem Stand der Technik ergeben sich unter anderem dadurch, dass der thermomechanische Schild einen Schutz für von den Wandungen und mindestens einem von diesen beispielsweise umfassten, die Wärmeisolation des Wärmespeichers zumindest teilweise besorgenden Isolationsmittel vor einem diese zerstörenden Horizontaldruck bildet, so dass ein kostengünsiger und mit baulich zugelassenen Mitteln einfach herzustellender Druckbehälter vorgesehen werden kann, dessen Behälterinnenraum den Wärmespeicherraum bildet. Nachdem bei einem beispielsweise einen Betonmantel umfassenden Druckbehälter ein hoher Wärmeeintrag in den Betonmantel zu einer Zerstörung desselben führen würde, bietet die Erfindung eine einfache Möglichkeit sowohl eine kostengünstig herzustellende Schüttung als Wärmespeichermittel zu verwenden, als auch einen einen durch wenigstens ein Isolationsmittel vor einem schädlichen Wärmeeintrag geschützten Betonmantel umfassenden Druckbehälter vorzusehen, um den Wärmespeicherraum zu umschließen. Beides ist nur durch Verwendung des thermomechanischen Schildes möglich, welcher einen Schutz des Betonmantels vor einem schädlichen und zerstörerischen Wärmeeintrag vermittels mindestens eines die Wärmeisolation des Wärmespeichers zumindest teilweise besorgenden Isolationsmittels erlaubt, indem ein diesen Isolationsmitteln gefährlich werdender Horizontaldruck in der Schüttung von den den Wärmespeicherraum begrenzenden und das mindestens eine Isolationsmittel beispielsweise umfassenden oder zumindest stützenden Wandungen fern gehalten wird.

Hierdurch besteht keine Gefahr, dass ein auf das mindestens eine Isolationsmittel einwirkender Horizontaldruck den kritischen Horizontaldruck übersteigt, wodurch das mindestens eine Isolationsmittel nach und nach zerstört würde und dadurch die Energieeffizienz des Wärmespeichers verloren ginge. Hierdurch weist ein mit einem thermomechanischen Schild ausgestatteter Wärmespeicher mit eine Schüttung umfassenden Wärmespeichermitteln im Vergleich zum Stand der Technik günstige Herstellungskosten bei gleichzeitig großer und beinahe unbegrenzter Langzeitstabilität auf.

Kurzbeschreibung der Zeichnungen

Die Erfindung wird nachfolgend anhand von in den Zeichnungen dargestellten Ausführungsbeispielen näher erläutert. Darin bezeichnen gleiche Bezugszeichen gleiche oder gleich wirkende Elemente. Der Übersicht halber können nur Bezugzeichen in den einzelnen Zeichnungen dargestellt sein, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:

Fig. 1　ein erstes Ausführungsbeispiel eines Wärmespeichermittel beherbergenden Wärmespeichers in einer Draufsicht.

Fig. 2　einen Längsschnitt entlang der Linie A-A durch den Wärmespeichermittel beherbergenden Wärmespeicher aus Fig. 1.

Fig. 3　einen Querschnitt entlang der Linie B-B durch den Wärmespeichermittel beherbergenden Wärmespeicher aus Fig. 2.

Fig.4　ein durch Weglassung einiger Details übersichtlicheres zweites Ausführungsbeispiel eines Wärmespeichermittel beherbergenden Wärmespeichers in einem dem Querschnitt aus Fig. 3 entsprechenden Querschnitt.

Fig. 5　einen Ausschnitt eines Schnitts durch eine Schüttung umfassende Wärmespeichermittel.

Fig. 6　einen Querschnitt durch einen Wärmespeichermittel beherbergenden Wärmespeicher gemäß eines dritten Ausführungsbeispiels.

Fig. 7　einen dem Querschnitt aus Fig. 6 entsprechenden Querschnitt durch einen Wärmespeichermittel beherbergenden Wärmespeicher gemäß eines vierten Ausführungsbeispiels.

Ausführliche Beschreibung der bevorzugten Ausführungsbeispiele

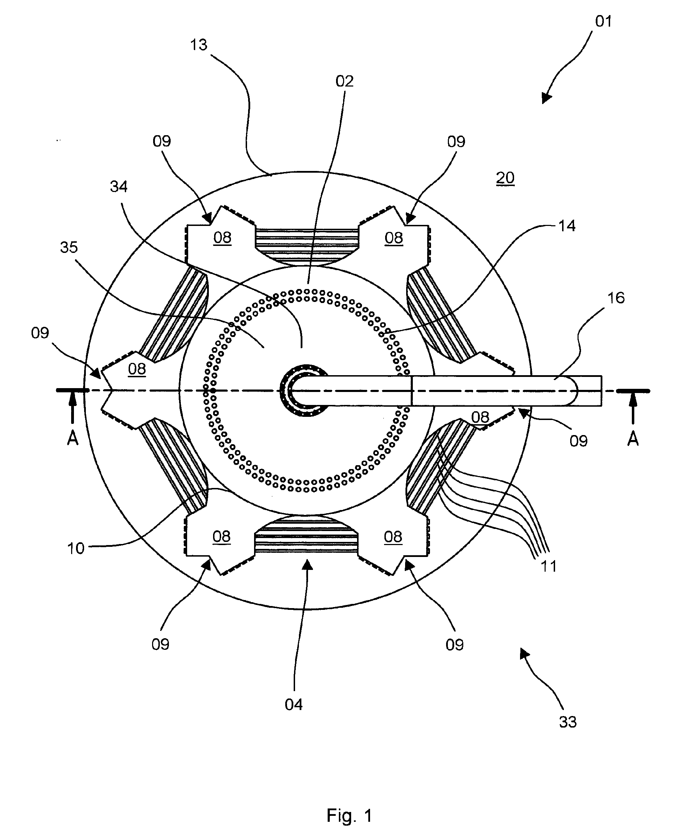

Ein in den Fig. 1 bis Fig. 7 ganz oder in Teilen bzw. verschiedenen Ansichten dargestellter Wärmespeicher 33 besteht im Wesentlichen aus mindestens einem Temperaturwechseln unterzogenen Wärmespeichermittel 22 beherbergenden und zum Austausch von Wärme mit den Wärmespeichermitteln 22 zumindest zeitweilig von einem Arbeitsfluid 27 durchströmten Wärmespeicherraum 23.

Der Wärmespeicherraum 23 ist bevorzugt durch einen von einem Betonmantel 07 umschlossenen Behälterinnenraum 05 gebildet.

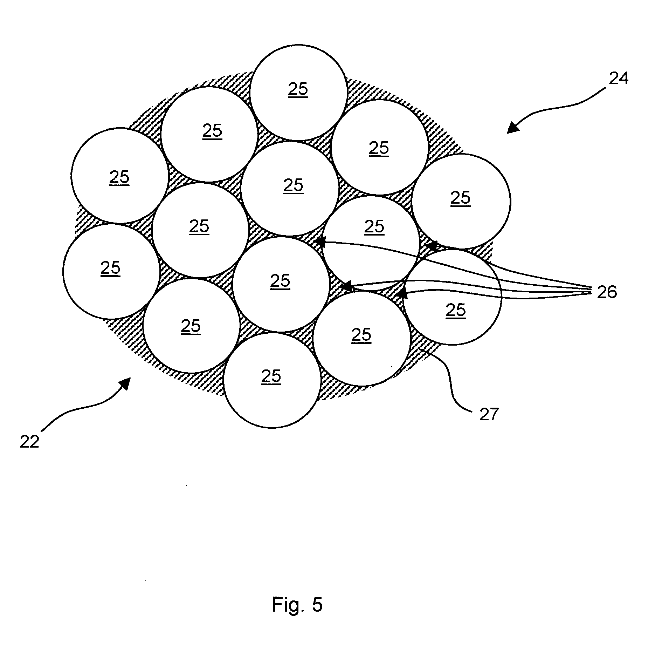

Die zum Austausch von Wärme mit dem Arbeitsfluid 27 sowie zur wenigstens zeitweiligen Speicherung der Wärme von deren Zufuhr bis zu deren Entnahme durch das Arbeitsfluid 27 vorgesehenen Wärmespeichermittel 22 umfassen eine in Fig. 5 dargestellte Schüttung 24 aus aneinander berührenden Schüttungselementen 25. Zwischen den Schüttungselementen 25 weist die Schüttung 24 miteinander kommunizierende, durchgehende Poren 26 auf. Die Poren 26 werden von dem Arbeitsfluid 27 zumindest zeitweilig durchströmt.

Die Schüttungselemente 25 können wie in Fig. 5 dargestellt gleiche Abmessungen und/oder gleiche Geometrien aufweisen. Alternativ können die Schüttungselemente 25 unterschiedliche Abmessungen und/oder unterschiedliche Geometrien aufweisen.

In dem Wärmespeicherraum 23 ist mindestens ein thermomechanischer Schild 40 untergebracht. Der mindestens eine thermomechanische Schild 40 umfasst wenigstens ein die Wärmeisolation des Wärmespeichers 33 zumindest teilweise besorgendes Isolationsmittel 44.

Damit der Druck zwischen der Schüttung 24 und den das mindestens eine Isolationsmittel 44 zumindest stützenden Wandungen 30 des die Schüttung 24 beherbergenden Wärmespeicherraums 23 unterhalb eines auch als kritischer Horizontaldruck bezeichneten Werts bleibt, bei dessen Übersteigen es zu einer Beschädigung und allmählichen Zerstörung des mindestens einen Isolationsmittels 44 kommt, umfasst der mindestens eine thermomechanische Schild 40 darüber hinaus wenigstens eine zumindest einen Teil zumindest des Horizontaldrucks in der Schüttung 24 von dem mindestens einen Isolationsmittel 44 fernhaltende Rückhalteeinrichtung 45.

Die mindestens eine Rückhalteeinrichtung 45 hält zumindest einen Teil der Schüttungselemente 25 der im Wärmespeicherraum 23 beherbergten Schüttung 24 vor einer zumindest in horizontaler Richtung auf den Wärmespeicherraum 23 zumindest teilweise umgebende Wandungen 30 des Wärmespeichers 33 zu gerichteten Bewegung zurück.

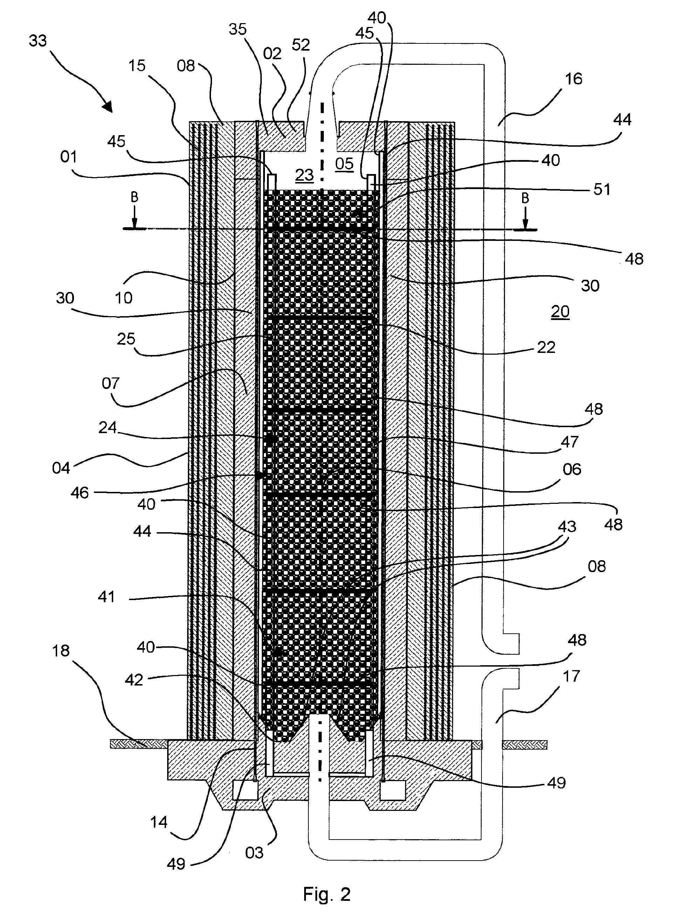

Zumindest ein Teil der Rückhalteeinrichtung 45 kann wie in Fig. 2, Fig. 3, Fig. 6 und Fig. 7 dargestellt als Käfig 46 zumindest für einen Teil der Schüttungselemente 25 der Schüttung 24 ausgeführt sein.

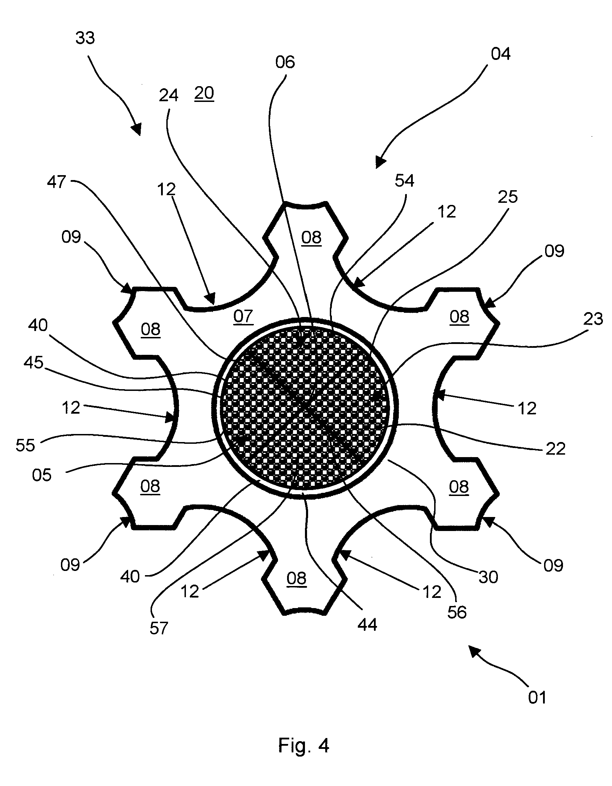

Alternativ oder zusätzlich kann zumindest ein Teil der Rückhalteeinrichtung 45 wie in Fig. 4 dargestellt gasdicht gegenüber den Wärmespeicherraum 23 begrenzenden und zumindest teilweise umschließenden Wandungen 30 ausgeführt sein.

In beiden Fällen kann die mindestens eine in dem Wärmespeicherraum 23 untergebrachte und zumindest einen Teil wenigstens eines thermomechanischen Schilds 40 bildende Rückhalteeinrichtung 45 wie in Fig. 2, Fig. 3, Fig. 4, Fig. 6 und Fig. 7 dargestellt von den Wärmespeicherraum 23 begrenzenden Wandungen 30 beabstandet angeordnet sein.

Die mindestens eine in dem Wärmespeicherraum 23 untergebrachte und zumindest einen Teil wenigstens eines thermomechanischen Schilds 40 bildende Rückhalteeinrichtung 45 kann wie in Fig. 2, Fig. 3, Fig. 4, Fig. 6 und Fig. 7 dargestellt beispielsweise durch stehend in dem Wärmespeicherraum 23 angeordnete und mit wenigstens einem Teil der Schüttungselemente 25 der Schüttung 24 befüllte und bevorzugt vom Arbeitsfluid 27 zumindest zeitweilig durchströmte Rohre 47 verwirklicht sein.

Beispielsweise können wie in Fig. 2, Fig. 3, Fig. 6 und Fig. 7 dargestellt mehrere stehend angeordnete Rohre 47 zumindest über den Umfang des Wärmespeicherraums 23 vorzugsweise gleichmäßig verteilt angeordnet sein. Dabei können mehrere stehend angeordnete Rohre 47, vorzugsweise zumindest die über den Umfang verteilt angeordneten Rohre 47, gemeinsam auf mindestens einer Höhenstufe innerhalb des Wärmespeicherraums untereinander beispielsweise mittels eines Ringreifs 48 verbunden und dadurch versteift sein. Dabei kann die Gesamtzahl bzw. Gesamtheit der Rohre 47 bzw. zumindest ein Teil der Rohre 47 einen Käfig 46 für zwischen den Rohren 47 angeordnete Schüttungselemente 25 der Schüttung 24 bilden. Die einen Teil der Schüttungselemente 25 der Schüttung 24 beherbergenden Rohre 47 können dabei selbst vom Arbeitsfluid 27 zumindest zeitweilig durchströmt sein, welches beispielsweise durch in einem Behälterfuß 03 des Wärmespeichers 33 vorgesehene Kanäle 49 in die Rohre 47 geleitet sein kann. Auch die zwischen den Rohren 47 verbleibenden Zwischenräume sind dabei bevorzugt vom Arbeitsfluid zumindest zeitweilig durchströmt.

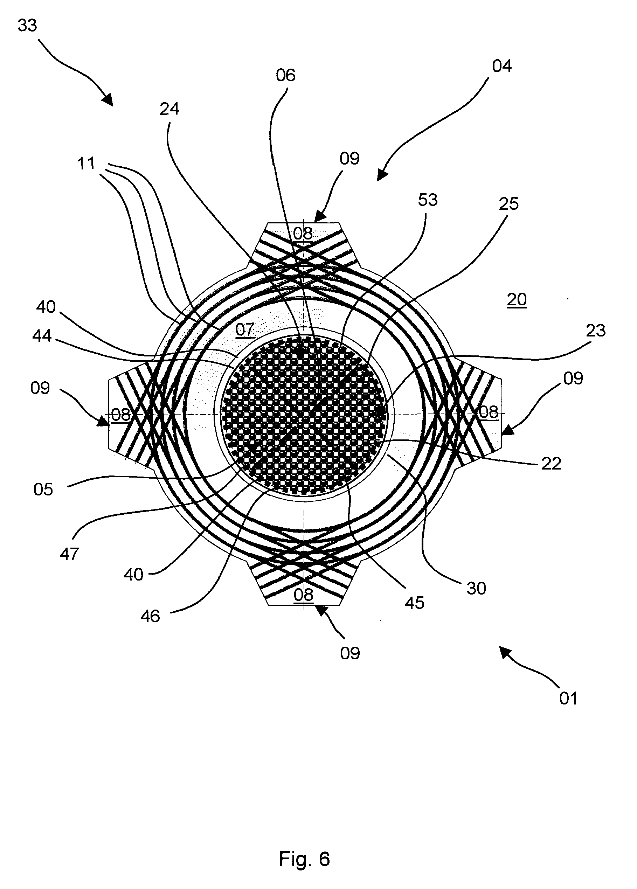

Dabei können die Rohre 47 wie in Fig. 6 dargestellt als gleichmäßig über den Umfang angeordnete, massive Stangen 53 ausgebildet sein, die derart eng nebeneinander stehend über den Umfang verteilt angeordnet sind, dass sie gemeinsam einen Käfig 46 für die innerhalb des Umfangs angeordneten Schüttungselemente 25 der Schüttung 24 bilden.

Die zumindest einen Teil zumindest eines thermomechanischen Schilds 40 bildenden Rohre 47 können wie in Fig. 2 dargestellt in einem oberen Bereich 51 des Wärmespeicherraums 23 vorzugsweise oberhalb der Schüttung 24 beispielsweise frei enden. Sind die Rohre vom Arbeitsfluid 27 zumindest zeitweilig durchströmt, kann das durch die Rohre 47 strömende Arbeitsfluid zunächst in den Wärmespeicherraum 23 münden, bevor es diesem entnommen wird.

Beispielsweise können die Rohre 47 alternativ oder zusätzlich an einem den Wärmespeicherraum 23 nach oben hin begrenzenden Deckel 52 befestigt sein.

Mindestens eine Rückhalteeinrichtung 45 kann wie in Fig. 4 dargestellt ein Rohrbündel 54 umfassen, welches in dem in Fig. 4 dargestellten Querschnitt zu den den Wärmespeicherraum 23 umgebenden Wandungen 30 des Wärmespeichers 33 hin eine geschlossene Außenkontur 55 aufweist. Innerhalb dieser geschlossenen Außenkontur 55 grenzen die jeweils einen mit Schüttungselementen 25 befüllten Kanal bildenden Rohre 47 des Rohrbündels 54 unmittelbar, beispielsweise durch eine gemeinsame, gegebenenfalls perforierte oder mit Durchbrüchen versehene oder geschlossene Trennwand 56 aneinander an. Die derart ausgeführte Rückhalteeinrichtung 45 unterteilt den zur Verfügung stehenden, durch die Außenkontur 55 umgebenen bzw. eingeschlossenen Teil des Wärmespeicherraums 23 beispielsweise in Segmente 57.

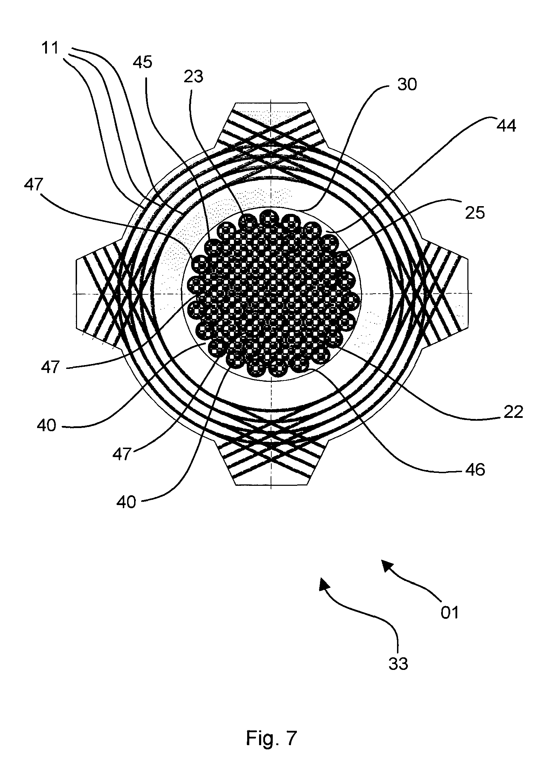

Wichtig ist hervorzuheben, dass im gesamten Wärmespeicherraum 23 des Wärmespeichers 33, auch innerhalb des von gleichmäßig über den Umfang des Wärmespeicherraums 23 verteilt angeordneten Rohren 47 umgebenen Umfangs, beispielsweise weitere ebenfalls gegebenenfalls mit Schüttungselementen 25 befüllte Rohre 47 angeordnet sein können, wie vereinfacht in Fig. 7 dargestellt. Ein zwischen der den Wärmespeicherraum 23 umgebenden Wandung 30 und der Rückhalteeinrichtung 45 angeordnetes Isolationsmittel 44 kann dabei der Form der am Umfang verteilt angeordneten Rohre 47 angepasst sein.

Die mit Schüttungselementen 25 zumindest teilweise befüllten Rohre 47 können wie in Fig. 7 dargestellt wenigstens teil- und/oder abschnittsweise perforiert bzw. mit Durchbrüchen in ihren Mantelflächen versehen sein. Hierdurch wird eine Verbesserung des Wärmeaustauschs einhergehend mit einer Verringerung der Durchströmungsverluste durch Vergrößerung des zur Durchströmung mit dem Arbeitsfluid zur Verfügung stehenden Querschnitts und durch Bildung alternativer Strömungswege erreicht.

Die Schüttungselemente 25 der Schüttung 24 sind wie in Fig. 5 dargestellt vorzugsweise kugelförmig. Besonders bevorzugt weisen alle Schüttungselemente 25 gleichen Durchmesser auf.

Wichtig ist hervorzuheben, dass wenigstens ein Teil der Schüttungselemente 25 zumindest zum Teil gebrochenes Naturmaterial umfassen können. Alternativ oder zusätzlich ist denkbar, dass wenigstens ein Teil der Schüttungselemente 25 zumindest teilweise aus einem Keramikmaterial bestehen können und/oder zumindest teilweise aus Eisen und/oder Stahl. Die Schüttungselemente 25 können wie in Fig. 5 dargestellt sämtlich, oder zum Teil kugelförmig sein.

Der Wärmespeicher 33 kann einen Druckbehälter 01 mit einem von einem Betonmantel 07 umschlossenen Behälterinnenraum 05 als die Wärmespeichermittel 22 beherbergenden Wärmespeicherraum 23 umfassen.

Hierdurch ist der Wärmespeicher 33 insbesondere zur Verwendung in einem Druckluftspeicherkraftwerk geeignet. Bei einer solchen Verwendung kann der Wärmespeicher von der das Arbeitsfluid des Druckluftspeicherkraftwerks bildenden Druckluft direkt durchströmt sein.

Der Betonmantel 07 umfasst wenigstens eine zwischen einem Behälterkopf 02 und einem Behälterfuß 03 vorgesehene hohlzylinderförmige Behälterpartie 04. Der Behälterinnenraum 05 ist vom Behälterkopf 02, dem Behälterfuß 03 und der wenigstens einen hohlzylinderförmigen Behälterpartie 04 umschlossen. Der Betonmantel 07 kann darüber hinaus zusätzlich zu der hohlzylinderförmigen Behälterpartie 04 zumindest Teile des Behälterkopfs 02 und/oder Behälterfußes 03 umfassen.

Die hohlzylinderförmige Behälterpartie 04 kann eine gerade, gekrümmt oder entlang einer beliebigen Linie verlaufende Zylinderachse 06 aufweisen, welche sich entlang der Achse des Druckbehälters 01 vom Behälterkopf 02 bis zum Behälterfuß 03 erstreckt. Die hohlzylinderförmige Behälterpartie 04 kann aneinander angrenzend gleiche oder unterschiedliche Außen und/oder Innenquerschnitte aufweisen, wobei die Mittelpunkte aufeinander folgender Querschnitte vorzugsweise entlang der Zylinderachse 06 verlaufen. Der Behälterkopf 02 kann beispielsweise den Deckel 52 des Wärmespeicherraums 23 und der Behälterfuß 03 den Boden 42 des Wärmespeicherraums 23 bilden. Es ist sowohl eine stehende, als auch eine liegende Anordnung des Druckbehälters 01 denkbar. Bei einer stehenden Anordnung dient der Behälterfuß 03 wie in Fig. 2 dargestellt bevorzugt einer Aufstellung des Druckbehälters 01 beispielsweise auf dem Erdboden 18 bzw. einer zumindest zum Teil beispielsweise in den Erdboden 18 eingelassenen Aufstellung des Druckbehälters 01.

Um unter Anderem Belastungen durch die aus dem beispielsweise unter Druck stehenden Arbeitsfluid 27 resultierenden Kräfte zu widerstehen, kann der Betonmantel 07 wenigstens teilweise in mindestens einer Richtung schlaff bewehrt sein. Hierzu können Bewehrungen 15 vorgesehen sein, welche in Umfangsrichtung und/oder in Richtung entlang der Zylinderachse 06 und/oder in einer anderen Richtung, beispielsweise spiralförmig um die Zylinderachse 06 herum im Betonmantel 07 verlaufen können.

Alternativ oder zusätzlich kann der Betonmantel 07 wenigstens teilweise in mindestens einer Richtung vorgespannt sein. Hierzu können getrennte Spannglieder 11 in Umfangsrichtung und/oder Spannglieder 14 in Richtung entlang der Zylinderachse 06 vorgesehen sein.

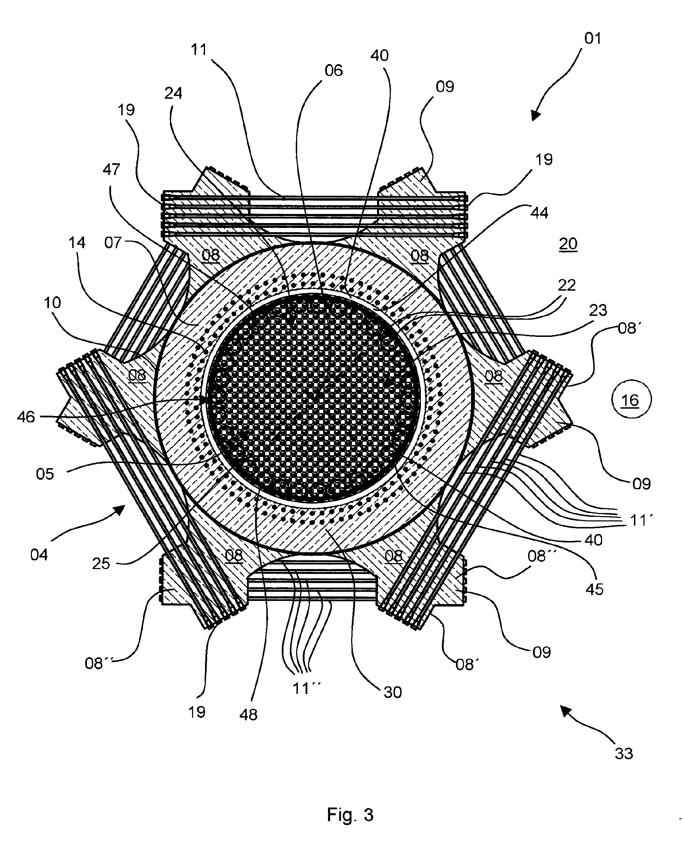

Dabei können wie bei der in den Fig. 3 dargestellten Ausgestaltung in Umfangsrichtung wirkende linear verlaufende bzw. lineare Spannglieder 11 vorgesehen sein. Da diese nicht gekrümmt verlaufen, sondern linear verlaufend ausgebildet sind, weisen diese keine Reibungsverluste durch eine auch nur teilweise Umschlingung auf, wodurch es auch zu keinen Verschleißerscheinungen beispielsweise durch eine thermische und/oder mechanische Wechselbeanspruchung des als Wärmespeicher 33 mit veränderlicher Temperatur und dadurch veränderlicher Wärmeausdehnung ausgeführten Druckbehälters 01 kommt. Darüber hinaus ist durch außen liegende lineare Spannglieder 11 ein gleichmäßiger Verlauf der Vorspannung sichergestellt.

Alternativ können die in Umfangsrichtung wirkenden Spannglieder 11 wie in Fig. 6 und Fig. 7 dargestellt die Zylinderachse 06 zumindest teilweise umschlingen, wobei die Spannglieder 11 zumindest abschnittsweise gekrümmt verlaufen. Eine derart nur teilweise Umschlingung stellt einen vertretbaren Kompromiss zwischen Wirtschaftlichkeit im Hinblick auf die Anzahl der Spannglieder 11 und Verschleiß durch Reibungsverluste dar.

Wichtig ist an dieser Stelle hervorzuheben, dass der Übersichtlichkeit halber und um andere, nachfolgend noch beschriebene Elemente besser erkennbar darzustellen, in Fig. 4 auf die Darstellung von Spanngliedern verzichtet wurde, was keinesfalls bedeuten soll, dass bei der in Fig. 4 dargestellten Ausführungsform keine derartigen Spannglieder vorgesehen sein können.

Zur Verwirklichung einer Vorspannung in Umfangrichtung mittels linearer Spannglieder 11 können diese wie in den Fig. 1 bis Fig. 3 dargestellt außerhalb des Betonmantels 07 angeordnet sein. Hierzu können zumindest auf dem als hohlzylinderförmige Behälterpartie 04 ausgebildeten Teil des Betonmantels 07 von der Zylinderachse 06 aus gesehen auf der dem Behälterinnenraum 05 abgewandten Außenseite des Betonmantels radial nach außen aufstehende Fortsätze 08 vorgesehen sein, zwischen denen die linearen Spannglieder 11 gespannt sind.

Die auf der hohlzylinderförmigen Behälterpartie 04 des Betonmantels 07 radial von der Zylinderachse 06 weg nach außen aufstehende Fortsätze 08 sind hierbei in einem in den Fig. 3 und Fig. 4 dargestellten, normal zur Zylinderachse 06 verlaufenden Querschnitt und in der in Fig. 1 dargestellten Draufsicht vorzugsweise gleichmäßig über den Umfang des Betonmantels 07 verteilt angeordnet. In den in den Fig. 3 und Fig. 4 dargestellten Querschnitten erstrecken sich die Fortsätze 08 vorzugsweise ununterbrochen vom Behälterfuß 03 zum Behälterkopf 02.

Die Fortsätze 08 sind zumindest derart weit aufstehend ausgebildet, dass zumindest vom freien Ende 09 jeden Fortsatzes 08 aus zumindest die freien Enden 09 der beiden in Umfangsrichtung unmittelbar benachbarten Fortsätze 08 in gerader Linie über die konvexe Wölbung der Mantelfläche 10 des Betonmantels 07 hinweg sichtbar sind. Hieraus ergibt sich die Notwendigkeit, dass wenigstens drei auf dem Betonmantel 07 radial nach Außen von der Zylinderachse 06 weg aufstehende Fortsätze 08 vorgesehen sind.

Zwischen in Umfangsrichtung benachbarten Fortsätzen 08 sind die linearen Spannglieder 11 angeordnet. Die linearen Spannglieder 11 halten wenigstens die hohlzylinderförmige Behälterpartie 04 des Betonmantels 07 unter einer in Umfangsrichtung und gegen einen Überdruck im Behälterinnenraum 05 wirkende radial von außen zur Zylinderachse 06 hin gerichteten Vorspannung.

Vorzugsweise ist eine gerade Anzahl n von gleichmäßig verteilt um den Umfang des Betonmantels 07 angeordneten Fortsätzen 08 vorgesehen. Besonders bevorzugt sind wie in den Fig. 1 bis 4 dargestellt insgesamt sechs gleichmäßig über den Umfang verteilt auf dem Betonmantel 07 von der Zylinderachse 06 weg radial nach außen aufstehende Fortsätze 08 vorgesehen.

Hierdurch können wie in Fig. 3 ersichtlich in einer ersten normal zur Zylinderachse 06 verlaufenden Querschnittsebene lineare Spannglieder 11' zwischen ersten Paaren aus benachbarten Fortsätzen 08' gespannt sein, wohingegen in einer unmittelbar benachbarten, zweiten normal zur Zylinderachse 06 verlaufenden Querschnittsebene lineare Spannglieder 11" zwischen zweiten Paaren aus benachbarten Fortsätzen 08" gespannt sind. Die ersten Paare benachbarter Fortsätze 08', zwischen denen in der ersten Querschnittsebene die Spannglieder 11' gespannt sind, sind hierbei gegenüber den zweiten Paaren benachbarter Fortsätze 08", zwischen denen in der zweiten Querschnittsebene die Spannglieder 11" gespannt sind, um einen Winkel 360°/n um die Zylinderachse 06 verdreht, wobei n die Zahl der Fortsätze in einer Querschnittsebene ist. Wichtig ist an dieser Stelle hervorzuheben, dass die Fortsätze 08 integrale Bestandteile wenigstens der hohlzylinderförmigen Behälterpartie 04 des Betonmantels 07 sein können, wobei die Fortsätze 08 hierbei in einem Herstellungsvorgang gemeinsam mit dem Betonmantel 07 und vorzugsweise mit diesem fest verbunden hergestellt werden können. Alternativ können die Fortsätze 08 stempelförmig auf dem Betonmantel 07 aufstehend ausgebildet sein. Darüber hinaus können sich die Fortsätze 08 in beiden Ausgestaltungsvarianten in einem Querschnitt normal zur Zylinderachse 06 betrachtet vom Betonmantel 07 aus gesehen zu ihren freien Enden 09 hin verjüngen. Alternativ oder zusätzlich können die Fortsätze 08 in beiden Ausgestaltungsvarianten auswuchsartig mit gleichmäßigen und knickfreien Übergängen in die äußere Gestalt zumindest der hohlzylinderförmigen Behälterpartie 04 integriert sein.

Zwischen den benachbarten Fortsätzen 08 können Druckbogen 12 vorgesehen sein (Fig. 4).

Die freien Enden 09 der Fortsätze 08 können Aufnahmesysteme 19 für die linearen Spannglieder 11 tragen. Die Aufnahmesysteme 19 können als Metallkonstruktionen beispielsweise aus Stahl ausgeführt sein. Die linearen Spannglieder 11 erstrecken sich vom einen am freien Ende 09 eines ersten Fortsatzes 08 angeordneten Aufnahmesystem 19 zum nächsten, am freien Ende 09 eines zweiten Fortsatzes 08 angeordneten Aufnahmesystem 19. Die linearen Spannglieder 11 können hierbei in so genannten Speichen verankert sein.

Der von dem Wärmespeicher 33 umfasste Druckbehälter 01 kann wie in Fig. 1 angedeutet durch eine Ummantelung 13 umhüllt sein. Die Ummantelung 13 kann dem Schutz des Druckbehälters 01 gegen Umwelteinflüsse, insbesondere gegen Witterungseinflüsse und Wärmestrahlung dienen. Durch Unterbrechung der Wärmestrahlung vermittels der Ummantelung 13 können Wärmeverluste des Wärmespeichers verringert werden. Gleichzeitig kann die Ummantelung 13 den Druckbehälter 01, insbesondere bei einer in den Fig. 1 bis Fig. 4 dargestellten Ausführung mit außen liegenden linearen Spanngliedern 11 gegen unbefugte und/oder unberechtigte Manipulation schützen. Die Ummantelung 13 kann als luftdurchlässige Hülle ausgestaltet sein, damit es zu keinem Wärmestau unter ihr kommt.

Zumindest der Betonmantel 07 des Druckbehälters 01 kann wie in Fig. 2 dargestellt mittels Spanngliedern 14 in Richtung parallel zur Zylinderachse 06 vorgespannt sein. Die Spannglieder 14 können hierbei vom Behälterkopf 02 zum Behälterfuß 03 in eigens hierfür vorgesehenen Kanälen, Aussparungen, Rohren oder dergleichen zumindest in der hohlzylinderförmigen Behälterpartie 04 des Betonmantels 07 des Druckbehälters 01 verdeckt verlaufen.

Der Betonmantel 07 kann wie in Fig. 2 dargestellt mittels einer zumindest in Richtung parallel zur Zylinderachse 06 verlaufenden Bewehrung 15 schlaff bewehrt sein. Alternativ oder zusätzlich kann auch eine schlaffe Bewehrung in Umfangsrichtung vorgesehen sein. Mittels einer gegebenenfalls vorgesehenen, auch als Schlaffbewehrung bezeichneten schlaff ausgeführten Bewehrungen kann die Sicherheit des als Druckbehälter 01 ausgeführten Wärmespeichers 23 gesteuert werden.

Wichtig ist hierbei die Trennung der Vorspannung von der für eine zusätzliche Sicherheit eventuell eingebauten schlaffen Bewehrung 15 hervorzuheben. Die schlaffe Bewehrung 15 kann ohne Störung und Berücksichtigung der Vorspannung im inneren Betonmantel 07 verlegt werden, und die Vorspannung kann außen angebracht werden. Das vereinfacht die Planung und den Bau eines als Druckbehälter 01 ausgeführten Wärmespeichers 23 erheblich und verbessert das Tragverhalten durch weniger Fehlstellen und Hohlräume im Betonmantel 07.

Der Betonmantel 07 kann wie in den Fig. 3 und Fig. 4 dargestellt einen normal zur Zylinderachse 06 kreisrunden Innenquerschnitt aufweisen.

Der als Druckbehälter 01 ausgeführte Wärmespeicher 33 kann wie in Fig. 2 dargestellt beispielsweise am Behälterkopf 02 mit einer ersten Zu- und/oder Abführungsleitung 16 für das Arbeitsfluid 27 versehen sein. Beispielsweise am Behälterfuß 03 kann der Druckbehälter 01 beispielsweise mit wenigstens einer zweiten Zu- und/oder Abführungsleitung 17 für das Arbeitsfluid 27 versehen sein.

Der einen Druckbehälter 01 mit im durch den Behälterinnenraum 05 gebildeten Wärmespeicherraum 23 beherbergten Wärmespeichermitteln 22 umfassende Wärmespeicher 33 kann Teil einer Einrichtung zur Energieerzeugung, beispielsweise Teil eines Solarkraftwerks, insbesondere eines solarthermischen Kraftwerks sein.

Besonders bevorzugt kann der Wärmespeicher 33 für ein Druckluftspeicherkraftwerk, besonders bevorzugt für ein adiabatisches Druckluftspeicherkraftwerk vorgesehen sein.

Die erste Zu- und/oder Abführungsleitung 16 steht in diesem Fall bevorzugt wahlweise mit einem Verdichter oder einer Turbine in Verbindung bzw. ist wahlweise mit einem Verdichter oder einer Turbine in Verbindung bringbar. Die zweite Zu- und/oder Abführungsleitung 17 steht hierbei bevorzugt mit einem beispielsweise unterhalb des Erdbodens 18 angeordneten Druckluftspeicher in Verbindung bzw. ist wahlweise mit einem Druckluftspeicher in Verbindung bringbar.

Beispielsweise kann der Behälterkopf 02 eines vom Wärmespeicher 33 umfassten Druckbehälters 01 abnehmbar sein, wodurch der Behälterinnenraum 05 für Montage und Wartung, sowie zum Einbringen der die Wärmespeichermittel 22 bildenden Schüttung 24 leicht zugänglich ist. Vorzugsweise befindet sich bei einem aufrecht stehenden Druckbehälter 01 mindestens der Behälterkopf 02 oberhalb des Erdbodens 18, der Rest kann im Erdboden 18 versenkt sein. Alternativ ist denkbar, lediglich eine beispielsweise mittels einer Stahlkappe 34 verschlossene Zugangsöffnung im Behälterkopf 02 vorzusehen.

Vorzugsweise trennt eine nicht näher dargestellte, durch mindestens eine ebenfalls nicht näher dargestellte hitzebeständige Schicht geschützte erste thermisch isolierende Schicht die Wärmespeichermittel 22 vom hitzeempfindlicheren Betonmantel 07. Zwischen der ersten thermisch isolierenden Schicht und Betonmantel 07 sowie gegebenenfalls dem Behälterkopf 02 und dem Behälterfuß 03 kann sich darüber hinaus noch eine zweite thermisch isolierende Schicht befinden, falls die erste thermisch isolierende Schicht nicht selbst in ausreichendem Maße thermisch isolierend wirkt. Die zweite thermisch isolierende Schicht kann beispielsweise aus Luft bestehen. Die hitzebeständige Schicht nebst den einen oder mehreren thermisch isolierenden Schichten bilden dabei zumindest einen Teil einer Wärmeisolierung und/oder Wärmedämmung des Wärmespeicherraums 23 gegenüber der Umgebung 20. Hierbei kann es sich beispielsweise um eine von den Wandungen des Wärmespeicherraums 23 umfasste Wärmeisolierung und/oder Wärmedämmung handeln.

Besonders bevorzugt handelt es sich bei der hitzebeständigen Schicht nebst den einen oder mehreren thermisch isolierenden Schichten zumindest zum Teil um wenigstens ein Isolationsmittel 44 zumindest eines thermomechanischen Schilds 40.

Der beispielsweise im oberen Bereich eines von einem Wärmespeicher 33 umfassten, stehend angeordneten Druckbehälters 01 vorgesehene Behälterkopf 02 kann als eine Betonkappe 35 ausgestaltet sein. Ebenso ist denkbar, dass eine Stahlkappe 34 in eine den Behälterkopf 02 bildenden Betonkappe 35 integriert ist.

Zumindest der Behälterkopf 02 und/oder der Behälterfuß 03 und/oder die hohlzylinderförmige Behälterpartie 04 des Betonmantels 07 des Druckspeichers 01 des Wärmespeichers 33 können gegen die Umgebung 20 durch wärmedämmendes Material thermisch isoliert sein. Die thermische Isolation kann zumindest zum Teil durch die gegebenenfalls vorgesehene Ummantelung 13 erfolgen.

Der Behälterfuß 03 kann in Form eines am Erdboden 18 oder zumindest zum Teil darin versenkt angeordneten Fundaments ausgestaltet sein, in den die darauf aufstehende und mittels des Behälterkopfs 02 an ihrer dem Erdboden 18 abgewandten Seite verschlossene hohlzylinderförmige Behälterpartie 04 des Betonmantels 07 eingegossen sein kann.

Die Erfindung ist insbesondere im Bereich der Herstellung von Wärmespeichern, beispielsweise für Anlagen zur Energieerzeugung und/oder zur Energiespeicherung, wie etwa einem Druckluftspeicherkraftwerk, gewerblich anwendbar.

**Bezugszeichenliste**

| | |
|---|---|
| 01 | Druckbehälter |
| 02 | Behälterkopf |
| 03 | Behälterfuß |
| 04 | hohlzylinderförmige Behälterpartie |
| 05 | Behälterinnenraum |
| 06 | Zylinderachse |
| 07 | Betonmantel |
| 08; 08'; 08" | Fortsatz |
| 09 | freies Ende |
| 10 | Mantelfläche |
| 11; 11'; 11" | Spannglied |
| 12 | Druckbogen |
| 13 | Ummantelung |
| 14 | Spannglied |
| 15 | Bewehrung |
| 16 | erste Zu- und/oder Abführungsleitung |
| 17 | zweite Zu- und/oder Abführungsleitung |
| 18 | Erdboden |
| 19 | Aufnahmesystem |
| 20 | Umgebung |
| 22 | Wärmespeichermittel |
| 23 | Wärmespeicherraum |
| 24 | Schüttung |
| 25 | Schüttungselement |
| 26 | Pore |
| 27 | Arbeitsfluid |
| 30 | Wandung |
| 33 | Wärmespeicher |
| 34 | Stahlkappe |
| 35 | Betonkappe |
| 40 | thermomechanischer Schild |
| 41 | unterer Bereich des Wärmespeicherraums |
| 42 | Boden des Wärmespeicherraums |
| 43 | trichter- oder siloartige Ausgestaltung |
| 44 | Isolationsmittel |
| 45 | Rückhalteeinrichtung |
| 46 | Käfig |
| 47 | Rohr |
| 48 | Ringreif |
| 49 | Kanal |
| 51 | oberer Bereich des Wärmespeicherraums |
| 52 | Deckel |
| 53 | Stange |
| 54 | Rohrbündel |
| 55 | Außenkontur |
| 56 | Trennwand |
| 57 | Segment |

**Patentansprüche**

1. Wärmespeicher (33) mit:

   - in einem Wärmespeicherraum (23) beherbergten, Temperaturwechseln unterzogenen Wärmespeichermitteln (22), welche zumindest zeitweilig von einem die Wärmezufuhr zum und die Wärmeentnahme aus dem Wärmespeicher (33) besorgenden Arbeitsfluid (27) durchströmt sind, wobei die Wärmespeichermittel (22) eine Schüttung (24) mit einander berührenden Schüttungselementen (25) umfassen, und die Schüttung (24) zwischen den einander berührenden Schüttungselementen (25) miteinander kommunizierende, durchgehende Poren (26) aufweist, welche zumindest zeitweilig von dem Arbeitsfluid (27) durchströmt sind,
   - mindestens einem in dem Wärmespeicherraum (23) untergebrachten thermomechanischen Schild (40) umfassend wenigstens ein die Wärmeisolation des Wärmespeichers (33) zumindest teilweise besorgendes Isolationsmittel (44) sowie wenigstens eine zumindest einen Teil zumindest des Horizontaldrucks in der Schüttung (24) von dem mindestens einen Isolationsmittel (44) fernhaltende Rückhalteeinrichtung (45), wobei zumindest ein Teil der Rückhalteeinrichtung (45) als Käfig (46) zumindest für einen Teil der Schüttungselemente (25) der Schüttung (24) ausgeführt ist,

   **dadurch gekennzeichnet, dass**:

   - die mindestens eine Rückhalteeinrichtung (45) mehrere stehend in dem Wärmespeicherraum (23) angeordnete und mit wenigstens einem Teil der Schüttungselemente (25) der Schüttung (24) befüllte und bevorzugt vom Arbeitsfluid (27) zumindest zeitweilig durchströmte Rohre (47) umfasst, und
   - mehrere stehend angeordnete Rohre (47) zumindest über den Umfang des Wärmespeicherraums (23) gleichmäßig verteilt angeordnet sind, wobei die Rohre (47) einen Käfig (46) für zwischen den Rohren (47) angeordnete Schüttungselemente (25) der Schüttung (24) bilden und die zwischen den Rohren (47) verbleibenden Zwischenräume bevorzugt vom Arbeitsfluid (27) zumindest zeitweilig durchströmt sind.

2. Wärmespeicher nach Anspruch 1,
**dadurch gekennzeichnet,**
**dass** die mindestens eine Rückhalteeinrichtung (45) zumindest einen Teil der Schüttungselemente (25) der Schüttung (24) vor einer zumindest in horizontaler Richtung auf den Wärmespeicherraum (23) zumindest teilweise umgebende Wandungen (30) des Wärmespeichers (33) zu gerichteten Bewegung zurückhält.

3. Wärmespeicher nach Anspruch 1 oder 2,
**dadurch gekennzeichnet,**
**dass** zumindest ein Teil der Rückhalteeinrichtung (45) gasdicht gegenüber den Wärmespeicherraum (23) begrenzenden und zumindest teilweise umschließenden Wandungen (30) ausgeführt ist.

4. Wärmespeicher nach einem der Ansprüche 1, 2 oder 3,
**dadurch gekennzeichnet,**
**dass** die mindestens eine Rückhalteeinrichtung (45) von den Wärmespeicherraum (23) begrenzenden Wandungen (30) beabstandet angeordnet ist.

5. Wärmespeicher nach einem der vorhergehenden Ansprüche,
**dadurch gekennzeichnet,**
**dass** wenigstens ein Rohr (47) auf zumindest einer Höhenstufe innerhalb des Wärmespeicherraums (23) versteift ist.

6. Wärmespeicher nach einem der vorhergehenden Ansprüche,
**dadurch gekennzeichnet,**
**dass** mehrere stehend angeordnete Rohre (47) gemeinsam auf mindestens einer Höhenstufe innerhalb des Wärmespeicherraums (23) untereinander verbunden (48) und dadurch versteift sind.

7. Wärmespeicher nach einem der vorhergehenden Ansprüche,
**dadurch gekennzeichnet,**
**dass** wenigstens ein Teil der Schüttungselemente (25) kugelförmig ist.

8. Wärmespeicher nach einem der vorhergehenden Ansprüche,
**dadurch gekennzeichnet,**
**dass** alle Schüttungselemente (25) gleichen Durchmesser aufweisen.

## Claims

1. Heat storage (33), with:

    - heat storage means (22) which are accommodated in a heat storage space (23) and are subject to temperature changes through which flows at least temporarily a working fluid (27) attending to the supply of heat to and the extraction of heat from the heat storage (33), the heat storage means (22) comprising a loose packing (24) with loose packing elements (25) touching one another, and the loose packing (24) having, between the loose packing elements (25) touching one another, continuous pores (26) which communicate with one another and through which the working fluid (27) flows at least temporarily,
    - at least one thermomechanical shield (40) accommodated in the heat storage space (23) and comprising at least one insulating means (44) attending at least partially to the heat insulation of the heat storage (33), and also at least one retention device (45) keeping at least part of at least the horizontal pressure in the loose packing (24) away from the at least one insulating means (44), at least part of the retention device (45) being designed as a cage (46) at least for part of the loose packing elements (25) of the loose packing (24),

**characterized in that**:

    - the at least one retention device (45) comprises a plurality of tubes (47) which are arranged upright in the heat storage space (23) and are filled with at least part of the loose packing elements (25) of the loose packing (24) and through which the working fluid (27) preferably flows at least temporarily, and
    - a plurality of tubes (47) arranged upright are arranged so as to be distributed uniformly at least over the circumference of the heat storage space (23), the tubes (47) forming a cage (46) for loose packing elements (25) of the loose packing (24) which are arranged between the tubes (47), and the working fluid (27) preferably flowing at least temporarily through the interspaces remaining between the tubes (47).

2. Heat storage according to Claim 1, **characterized in that** the at least one retention device (45) retains at least part of the loose packing elements (25) of the loose packing (24) against a movement directed at least in the horizontal direction to walls (30) of the heat storage (33) which at least partially surround the heat storage space (23).

3. Heat storage according to Claim 1 or 2, **characterized in that** at least part of the retention device (45) is designed to be gas-tight with respect to walls (30) delimiting and at least partially surrounding the heat storage space (23).

4. Heat storage according to one of Claims 1, 2 and 3, **characterized in that** the at least one retention device (45) is arranged so as to be spaced apart from walls (30) delimiting the heat storage space (23).

5. Heat storage according to one of the preceding claims, **characterized in that** at least one tube (47) is stiffened at at least one height stage inside the heat storage space (23).

6. Heat storage according to one of the preceding claims, **characterized in that** a plurality of tubes (47) arranged upright are jointly connected (48) to one another at at least one height stage inside the heat storage space (23) and are thereby stiffened.

7. Heat storage according to one of the preceding claims, **characterized in that** at least some of the loose packing elements (25) are spherical.

8. Heat storage according to one of the preceding claims, **characterized in that** all the loose packing elements (25) have the same diameter.

**Revendications**

1. Accumulateur thermique (33) comprenant :

    - des moyens accumulateurs de chaleur (22) soumis à des variations de température et reçus dans un espace d'accumulation de chaleur (23), lesquels moyens accumulateurs de chaleur sont traversés au moins temporairement par un fluide de travail (27) assurant l'apport de chaleur à l'accumulateur thermique (33) et le prélèvement de chaleur de celui-ci, les moyens accumulateurs de chaleur (22) comportant un remplissage en vrac (24) comprenant des éléments de remplissage en vrac (25) en contact les uns avec les autres, et le remplissage en vrac (24) comprenant des pores traversants (26) communiquant entre eux entre les éléments de remplissage en vrac (25) en contact les uns avec les autres, lesquels pores sont traversés au moins temporairement par le fluide de travail (27),
    - au moins un bouclier (40) thermomécanique, placé dans l'espace d'accumulation de chaleur (23), comportant au moins un moyen d'isolation (44) assurant au moins partiellement l'isolation thermique de l'accumulateur thermique (33) ainsi qu'au moins un dispositif de retenue (45) maintenant au moins une partie d'au moins la pression horizontale dans le remplissage en vrac (24) à l'écart de l'au moins un moyen d'isolation (44), au moins une partie du dispositif de retenue (45) étant réalisée sous forme de cage (46) au moins pour une partie des éléments de remplissage en vrac (25) du remplissage en vrac (24), **caractérisé en ce que** :

    - l'au moins un dispositif de retenue (45) comporte plusieurs tubes (47) disposés verticalement dans l'espace d'accumulation de chaleur (23) et remplis d'au moins une partie des éléments de remplissage en vrac (25) du remplissage en vrac (24) et traversés au moins temporairement de préférence par le fluide de travail (27), et

    - plusieurs tubes (47) disposés verticalement sont disposés de manière répartie uniformément au moins sur la périphérie de l'espace d'accumulation de chaleur (23), les tubes (47) formant une cage (46) pour des éléments de remplissage en vrac (25), disposés entre les tubes (47), du remplissage en vrac (24), et les espaces intermédiaires restant entre les tubes (47) étant traversés au moins temporairement de préférence par le fluide de travail (27).

2. Accumulateur thermique selon la revendication 1, **caractérisé en ce que** l'au moins un dispositif de retenue (45) retient au moins une partie des éléments de remplissage en vrac (25) du remplissage en vrac (24) pour empêcher un déplacement orienté au moins dans la direction horizontale vers des parois (30) de l'accumulateur thermique (33) entourant au moins partiellement l'espace d'accumulation de chaleur (23).

3. Accumulateur thermique selon la revendication 1 ou 2, **caractérisé en ce qu'**au moins une partie du dispositif de retenue (45) est réalisée de manière étanche aux gaz vis-à-vis de parois (30) délimitant et entourant au moins partiellement l'espace d'accumulation de chaleur (23).

4. Accumulateur thermique selon l'une quelconque des revendications 1, 2 et 3, **caractérisé en ce que** l'au moins un dispositif de retenue (45) est disposé à distance de parois (30) délimitant l'espace d'accumulation de chaleur (23).

5. Accumulateur thermique selon l'une quelconque des revendications précédentes, **caractérisé en ce qu'**au moins un tube (47) est rigidifié sur au moins un niveau de hauteur à l'intérieur de l'espace d'accumulation de chaleur (23).

6. Accumulateur thermique selon l'une quelconque des revendications précédentes, **caractérisé en ce que** plusieurs tubes (47) disposés verticalement sont reliés les uns aux autres (48) et par conséquent rigidifiés en commun sur au moins un niveau de hauteur à l'intérieur de l'espace d'accumulation de chaleur (23).

7.  Accumulateur thermique selon l'une quelconque des revendications précédentes, **caractérisé en ce qu'**au moins une partie des éléments de remplissage en vrac (25) sont sphériques.

8.  Accumulateur thermique selon l'une quelconque des revendications précédentes, **caractérisé en ce que** tous les éléments de remplissage en vrac (25) présentent le même diamètre.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1857614 A2
- WO 2010060524 A1
- US 4286141 A
- DE 19749793 A1
- GB 2173886 A